# FASCICULE DE BREVET EUROPEEN

(11) **EP 4 186 784 B1**
(45) Date de publication et mention de la délivrance du brevet: **27.08.2025**
(21) Numéro de dépôt: 22206454.5
(22) Date de dépôt: 09.11.2022
(51) Int. Cl.: B64C 9/00, B64C 3/48

(54) **SYSTÈME DE GOUVERNE À GÉOMÉTRIE VARIABLE POUR AILE D'AÉRONEF**
STEUERFLÄCHENSYSTEM MIT VARIABLER GEOMETRIE FÜR FLUGZEUGFLÜGEL
VARIABLE GEOMETRY RUDDER SYSTEM FOR AN AIRCRAFT WING

(30) Priorité: 24.11.2021 FR 2112450
(43) Date de publication de la demande: 31.05.2023
(73) Titulaire: Airbus Operations SAS, 31060 Toulouse (FR)
(72) Inventeur: CALATAYUD, Cristobal, 92100 Boulogne Billancourt (FR); TRARIEUX, Benjamin, 31060 Toulouse (FR); ALBERT, Brice, 31060 Toulouse (FR)
(74) Mandataire: Gevers & Orès

(56) Documents cités:
- US-A1- 2006 186 269
- US-A1- 2010 259 046
- US-A1- 2013 224 024
- US-A1- 2013 256 461
- US-A1- 2019 061 910
- US-A1- 2019 084 665
- US-A1- 2021 139 128

## Description

### Domaine technique

La présente invention concerne une gouverne d'aéronef à géométrie variable.

### État de la technique

Généralement, une gouverne d'aéronef, telle qu'un aileron, est mise en mouvement autour d'un axe d'articulation à l'aide d'un actionneur. Cet axe d'articulation correspond également à un axe d'attache de la gouverne à une aile de l'aéronef. La gouverne est rigide. La mise en mouvement d'une telle gouverne vers un angle de déflexion associé à un coefficient de portance souhaité nécessite une dépense d'énergie assez importante de l'actionneur.

Le document US 2010/259046 décrit une pale pour éolienne à géométrie variable. Le document US 2006/186269 décrit une gouverne à géométrie variable. Les objets décrits dans ces documents ne sont pas pleinement satisfaisants.

### Exposé de l'invention

La présente invention a pour objet de remédier à cet inconvénient. Pour cela, elle concerne un système de gouverne à géométrie variable pour aile d'aéronef, l'aile comprenant un plan supérieur et un plan inférieur.

Selon l'invention, le système de gouverne comporte au moins :
- une peau souple supérieure destinée à être fixée à l'aile dans le prolongement du plan supérieur de l'aile ;
- une peau souple inférieure destinée à être mobile dans le prolongement du plan inférieur de l'aile par l'intermédiaire d'une liaison plan-plan, la peau souple inférieure étant fixée à la peau souple supérieure le long d'un bord de fuite de la gouverne ;
- au moins un actionneur destiné à générer un déplacement de la peau souple inférieure par rapport au plan inférieur de l'aile,
le déplacement de la peau souple inférieure entraînant une courbure de la peau souple supérieure et une courbure de la peau souple inférieure, la courbure de la peau souple supérieure et la courbure de la peau souple inférieure présentant une concavité orientée dans un même sens,
la peau souple supérieure présentant une épaisseur plus importante dans une zone située au niveau du bord de fuite et dans une zone située au niveau de fixation de la peau souple supérieure au plan supérieur de l'aile que dans une zone centrale située entre la zone située au niveau du bord de fuite et la zone située au niveau de ladite fixation, le rapport d'épaisseur entre la zone située au niveau du bord de fuite et la zone centrale étant compris entre 2 et 3, le rapport d'épaisseur entre la zone située au niveau de ladite fixation et la zone centrale étant compris entre 4 et 5.

Ainsi, grâce à la déformation des peaux souples selon une courbure, l'angle de déflexion nécessaire du système de gouverne est moins important que l'angle de déflexion nécessaire d'un système de gouverne rigide pour un même coefficient de portance. Ainsi la quantité d'énergie à fournir par l'actionneur est beaucoup moins importante que la quantité d'énergie à fournir par l'actionneur d'un système de gouverne rigide pour un même coefficient de portance.

De plus, le ou les actionneurs comprennent au moins un axe d'actionneur agencé pour être déplacé longitudinalement entre la peau souple supérieure et la peau souple inférieure, le ou les axes d'actionneur comportant une extrémité fixée à une surface interne de la peau souple inférieure.

En outre, le ou les actionneurs sont fixés sur une surface interne du plan inférieur de l'aile.

Selon une particularité, le ou les axes d'actionneur sont configurés pour coulisser chacun à travers une ouverture d'un longeron arrière de l'aile.

Par exemple, le système de gouverne comprend au moins une douille de guidage linéaire à billes configurée pour être montée sur la ou les ouvertures à travers laquelle le ou les axes d'actionneur sont aptes à coulisser.

Par ailleurs, le système de gouverne comprend en outre au moins un axe auxiliaire parallèle à l'axe ou aux axes d'actionneur, le ou les axes auxiliaires présentant une première extrémité fixée au longeron arrière et une deuxième extrémité libre dirigée vers le bord de fuite du système de gouverne, le système de gouverne comportant en outre au moins une douille auxiliaire fixée sur la surface interne de la peau souple inférieure, la deuxième extrémité libre étant apte à coulisser dans la douille auxiliaire.

Selon une particularité, le système de gouverne comprend en outre une ossature interne entre la peau souple supérieure et la peau souple inférieure, l'ossature interne présentant une rigidité en compression et en traction selon un axe sensiblement perpendiculaire à la peau souple supérieure ou la peau souple inférieure supérieure à une rigidité de l'ossature interne en cisaillement selon un axe sensiblement parallèle à la peau souple supérieure ou la deuxième peau souple inférieure.

L'invention concerne également un aéronef, en particulier un avion de transport, comportant au moins un système de gouverne, tel que décrit ci-dessus, équipant chacune de ses ailes.

### Brève description des figures

Les figures annexées feront bien comprendre comment l'invention peut être réalisée. Sur ces figures, des références identiques désignent des éléments semblables.
La figure 1 représente une vue en coupe transversale d'un système de gouverne selon deux positions différentes.
La figure 2 représente une vue schématique en coupe transversale d'un système de gouverne selon deux position différentes.
La figure 3 représente une vue en perspective d'une aile d'aéronef équipée du système de gouverne à géométrie variable.
La figure 4 représente une vue en contre-plongée d'une coupe d'un système de gouverne.
La figure 5 représente une vue en plongée d'une coupe d'un système de gouverne.
La figure 6 représente, à droite, une vue d'une coupe transversale le long d'un axe d'actionneur d'un système de gouverne et, à gauche un détail de la coupe transversale.
La figure 7 représente, à droite, une vue d'une coupe transversale le long d'un axe auxiliaire d'un système de gouverne et, à gauche un détail de la coupe transversale.
La figure 8 représente une coupe transversale des deux peaux souples mettant en évidence l'évolution transversale de leur épaisseur.
La figure 9 représente une vue en perspective d'un mode de réalisation du système de gouverne comportant une ossature interne.
La figure 10 représente une vue en perspective d'un aéronef dont les ailes sont équipées de systèmes de gouverne.

### Description détaillée

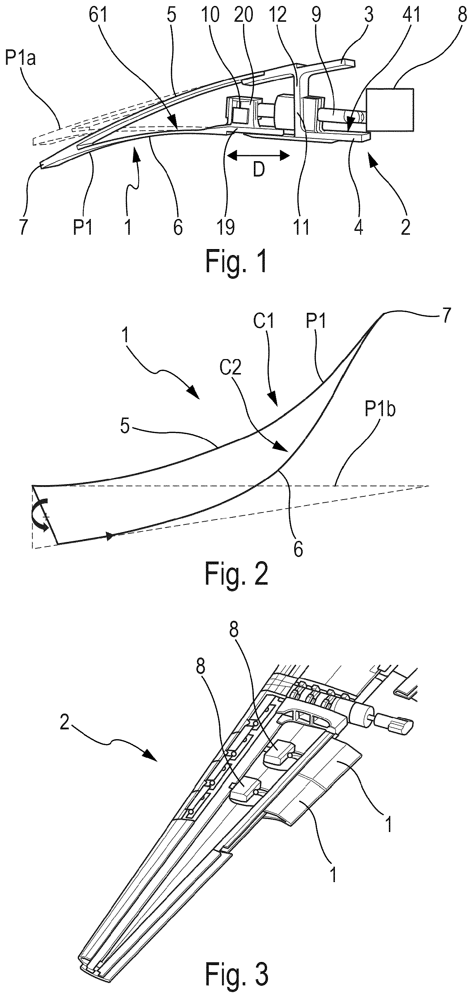

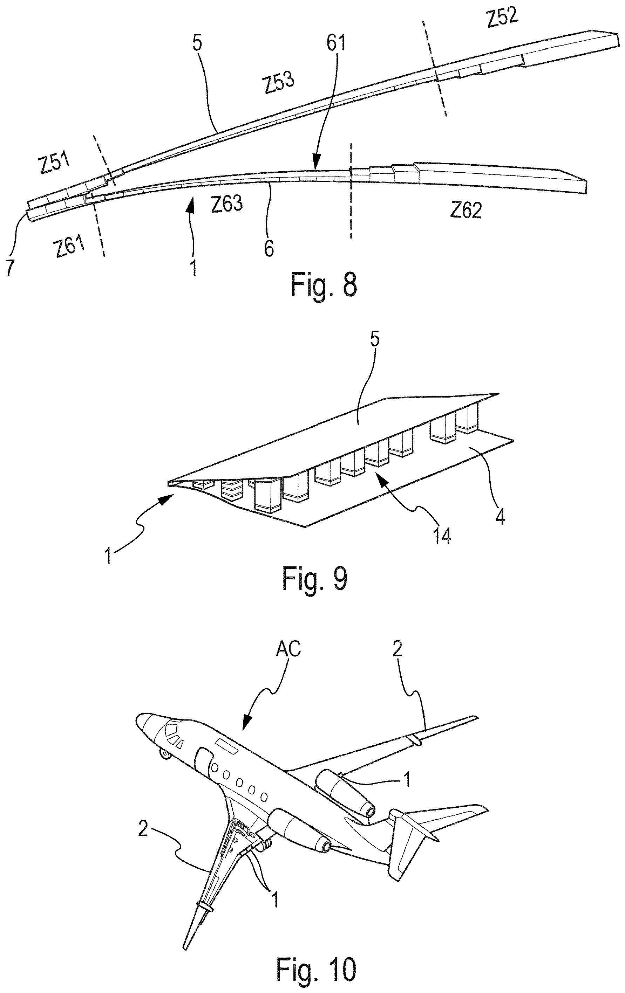

La figure 1 représente le système de gouverne 1 à géométrie variable pour une aile 2 d'aéronef AC (figure 10). Le système de gouverne 1 à géométrie variable peut correspondre à un système d'aileron à géométrie variable (« morphing aileron » en anglais).

Une gouverne à géométrie variable correspond à une gouverne non rigide qui peut se déformer pour changer de forme géométrique.

L'aile 2, que le système de gouverne 2 est destiné à équiper, comprend un plan supérieur 3 et un plan inférieure 4.

Le système de gouverne 1 comporte au moins une peau souple supérieure 5 et une peau souple inférieure 6. La peau souple supérieure 5 et la peau souple inférieure 6 se rejoignent pour former un bord de fuite 7 du système de gouverne 1. De façon non limitative, les peaux souples 5 et 6 peuvent être fabriquées en composite thermoplastique ou en composite thermodurcissable.

La peau souple supérieure 5 est destinée à être fixée à l'aile 2 dans le prolongement du plan supérieur 3 de l'aile 2. À titre d'exemple non limitatif, la peau souple supérieure 5 peut être fixée au plan supérieur 3 de l'aile 2 à l'aide de vis à tête fraisée.

La peau souple inférieure 6 est destinée à être mobile dans le prolongement du plan inférieur 4 de l'aile 2 par l'intermédiaire d'une liaison plan-plan entre le plan inférieur 4 et la peau souple inférieure 6. La peau souple inférieure 6 est fixée à la peau souple supérieure 5 le long du bord de fuite 7.

À titre d'exemple non limitatif, la peau souple inférieure 6 est fixée à la peau souple supérieure 5 le long du bord de fuite 7 par soudage dans le cas où les peaux souples supérieure 5 et inférieure 6 sont fabriquées à partir de composite thermoplastique. Elles peuvent être aussi fixées entre elles le long du bord de fuite 7 par cocuisson dans le cas où elles sont fabriquées à partir de composite thermoplastique ou thermodurcissable. Elles peuvent également être fixées entre elles le long du bord de fuite 7 par collage ou par des rivets.

Comme représenté sur la figure 8, la peau souple supérieure 5 présente une épaisseur plus importante dans une zone Z51 située au niveau du bord de fuite 7 et dans une zone Z52 située au niveau de la fixation de la peau souple supérieure 5 au plan supérieur 3 de l'aile 2 que dans une zone centrale Z53 située entre la zone Z51 et la zone Z52. Avantageusement, la peau souple inférieure 6 présente une épaisseur plus importante dans une zone Z61 située au niveau du bord de fuite 7 et dans une zone Z62 située au niveau de la liaison plan-plan entre la peau souple inférieure 6 et le plan inférieur 4 de l'aile 2 que dans une zone centrale Z63 située entre la zone Z61 et la zone Z62.

Les lignes en pointillées sur la figure 8 désignent les limites approximatives des différentes zones.

Le rapport d'épaisseur entre la zone Z51 et la zone centrale Z53 est compris entre 2 et 3. Le rapport d'épaisseur entre la zone Z52 et la zone centrale Z53 est compris entre 4 et 5. À titre d'exemple, la zone Z51 présente une épaisseur comprise entre 2,20 mm et 1,95 mm. La zone Z52 présente une épaisseur comprise entre 2,5 mm et 3 mm. La zone Z53 présente une épaisseur comprise entre 0,715 mm et 0,975 mm.

De même et de façon non limitative, le rapport épaisseur entre la zone Z61 et la zone centrale Z63 est compris entre 2 et 3. Le rapport d'épaisseur entre la zone Z62 et la zone centrale Z63 est compris entre 4 et 5. À titre d'exemple, la zone Z61 présente une épaisseur comprise entre 2,20 mm et 1,95 mm. La zone Z62 présente une épaisseur comprise entre 2,5 mm et 3 mm. La zone Z63 présente une épaisseur comprise entre 0,715 mm et 0,975 mm.

Ces rapports d'épaisseur permettent de maîtriser la forme de courbure des peaux souples 5 et 6.

Selon un mode de réalisation, l'épaisseur entre les zones Z51, Z52, Z53, Z61, Z62, Z63 peut évoluer de manière continue. Selon un autre mode de réalisation, l'épaisseur entre les zones Z51, Z52, Z53, Z61, Z62, Z63 peuvent évoluer en marches d'escalier comme représenté sur la figure 8.

Comme représenté sur la figure 3, le système de gouverne 1 comprend en outre au moins un actionneur 8 destiné à générer un déplacement D de la peau soupe 6 par rapport au plan inférieur 4 de l'aile 2. Sur la figure 1, la figure 6 et la figure 7, le déplacement D généré par le ou les actionneurs 8 est représenté par une double flèche.

Le ou les actionneurs 8 sont configurés pour générer un déplacement linéaire de la peau souple inférieure 6 dans deux sens opposés. Le sens de déplacement D de la peau souple inférieure 6 peut être dirigé alternativement vers le bord de fuite 7 ou dirigé à l'opposé du bord de fuite 7.

Le déplacement D de la peau souple inférieure 6 entraîne une courbure de la peau souple supérieure 5 et une courbure de la peau souple inférieure 6. La courbure de la peau souple supérieure 5 et la courbure de la peau souple inférieure 6 présentent une concavité C1, C2 orientée dans un même sens, comme représenté sur la figure 1 et la figure 2. Sur la figure 1, on a représenté une position P1 et une deuxième position P1a. Sur la figure 2, on a représenté une position P1b dans laquelle les peaux souples 5 et 6 présentent une courbure sensiblement nulle et une position P1 dans laquelle les peaux souples 5 et 6 présentent une courbure non nulle. Le sens de la concavité C1, C2 générée par un déplacement D dirigé vers le bord de fuite 7 est opposé au sens de la concavité C1, C2 générée par un déplacement D dirigé à l'opposé du bord de fuite 7.

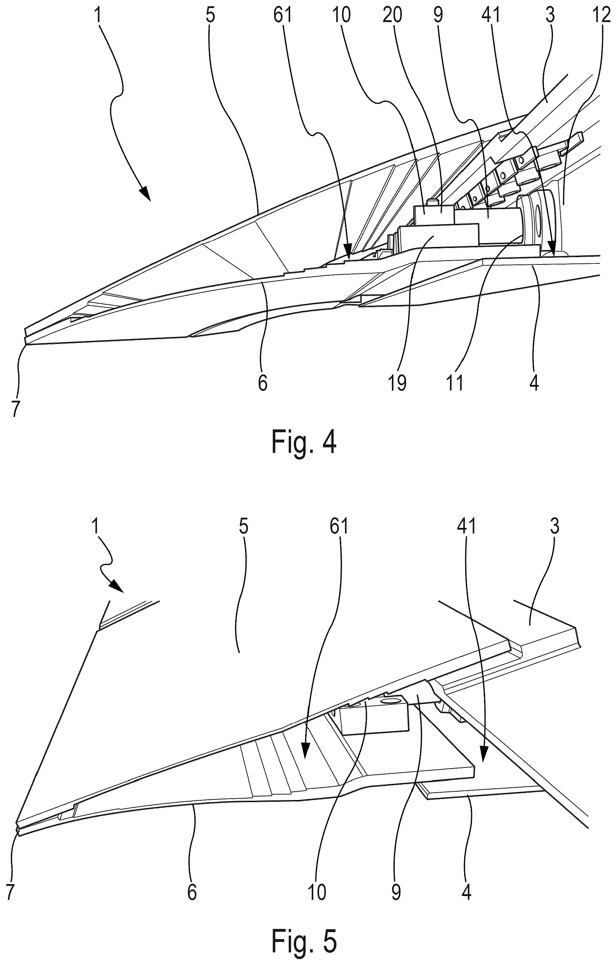

Le ou les actionneurs 8 comprennent au moins un axe d'actionneur 9 agencé pour être déplacé longitudinalement entre la peau souple supérieure 5 et la peau souple inférieure 6. Le ou les axes d'actionneur 9 comportent une extrémité 10 fixée à une surface interne 61 de la peau souple inférieure 6. Comme représenté sur la figure 4, la figure 5 et la figure 6, l'extrémité 10 peut être fixée à la surface interne 61 de la peau souple inférieure 6 par l'intermédiaire d'un support d'axe. Le support d'axe peut comporter une surface 19 fixée à la surface interne 61 de la peau souple inférieure 6 et une bride 20 dans laquelle l'extrémité 10 est bloquée ou fixée (figure 1, figure 4 et figure 6). La surface interne 61 de la peau souple inférieure 6 correspond à une surface de la peau souple inférieure 6 dirigée vers la peau souple supérieure 5.

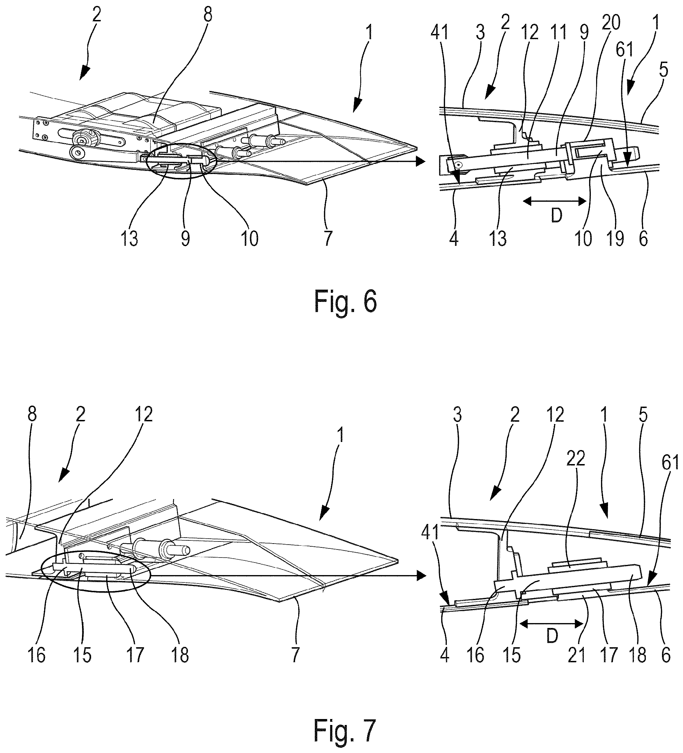

Avantageusement, comme représenté sur la figure 6, le ou les actionneurs 8 sont fixés sur une surface interne 41 du plan inférieur 4 de l'aile 2. Ainsi, le ou les axes d'actionneur 9 se déplacent linéairement par rapport à l'aile 2. La surface interne 41 du plan inférieur 4 de l'aile 2 correspond à une surface du plan inférieur 4 dirigée vers le plan supérieur 3 de l'aile 2. Par ailleurs, le ou les axes d'actionneur 9 contribuent à maintenir la liaison plan-plan entre la peau souple inférieure 6 et le plan inférieur 4.

Ainsi, lorsque le ou les actionneurs 8 sont actionnés, le ou les axes d'actionneur 9 se déplacent linéairement selon leurs axes longitudinaux respectifs. L'extrémité 10 du ou des axes d'actionneur 9 étant fixée à la peau souple inférieure 6, la peau souple inférieure 6 est entraînée par le ou les axes d'actionneur 9. La peau souple inférieure 6 étant fixée à la peau souple supérieure 5 le long du bord de fuite 7, la peau souple inférieure 6 et la peau souple supérieure 5 se déforment pour former la courbure décrite ci-avant.

Entre le plan supérieur 3 et la plan inférieur 4 de l'aile 2, l'aile 2 peut comprendre un longeron arrière 12 s'étendant sur toute l'envergure de l'aile 2. Ce longeron arrière 12 est situé au plus proche du bord de fuite de l'aile 2.

Le ou les axes d'actionneur 9 peuvent être configurés pour coulisser chacun à travers une ouverture 11 du longeron arrière 12 de l'aile 2. Le longeron arrière 12 peut alors servir de guide du ou des axes d'actionneur 9.

Le système de gouverne 1 peut aussi comprendre au moins une douille de guidage linéaire à billes 13 configurée pour être montée sur la ou les ouvertures 11 du longeron arrière 12 à travers laquelle le ou les axes d'actionneur 9 sont aptes à coulisser.

Avantageusement, comme représenté sur la figure 7, le système de gouverne 1 peut comprendre en outre au moins un axe auxiliaire 15. Le ou les axes auxiliaires 15 sont parallèles à l'axe ou aux axes d'actionneur 9. Le ou les axes auxiliaires 15 présentent une extrémité 16 fixée au longeron arrière 12 et une extrémité 18 libre dirigée vers le bord de fuite 7 du système de gouverne 1. Le système de gouverne 1 comporte en outre au moins une douille auxiliaire 17 fixée sur la surface interne 61 de la peau souple inférieure 6. L'extrémité 18 libre est apte à coulisser dans la douille auxiliaire 17. La ou les douilles auxiliaires 17 servent de guide du ou des axes auxiliaires 15. La ou les douilles auxiliaires peuvent être fixées à la surface interne 61 à l'aide de support d'axe. Le support d'axe peut comprend une surface 21 fixée sur la surface interne 61 de la peau souple inférieure 6 et une bride 22 sur laquelle la douille auxiliaire est montée (figure 7). Ainsi, lorsque le ou les actionneurs 8 sont actionnés, le ou les axes d'actionneur 9 entraînent la peau souple inférieure 6. L'entraînement de la peau souple inférieure 6 permet de générer un déplacement de la peau souple inférieure 6. Le déplacement de la peau souple inférieure 6 entraîne la ou les douilles auxiliaires 17 qui se déplacent alors autour du ou des axes auxiliaires 15. Par ailleurs, le ou les axes auxiliaires 15 contribuent à maintenir la liaison plan-plan entre la peau souple inférieure 6 et le plan inférieur 4.

Le ou les actionneurs 8 ainsi que les axes auxiliaires 15 présentent des dimensions permettant leur intégration dans une aile 2.

De plus, le système de gouverne 1 à géométrie variable permet de réduire la course nécessaire de l'axe d'actionneur 9 et la charge nécessaire fournie par le ou les actionneurs 8 par rapport la course nécessaire et la charge nécessaire d'un système de gouverne rigide pour un même coefficient de portance.

Comme représenté sur la figure 9, le système de gouverne peut comprendre en outre une ossature interne 14 entre la peau souple supérieure 5 et la peau souple inférieure 6. L'ossature interne 14 présente une rigidité en compression et en traction selon un axe sensiblement perpendiculaire à la peau souple supérieure 5 ou la peau souple inférieure 6 supérieure à une rigidité de l'ossature interne 14 en cisaillement selon un axe sensiblement parallèle à la peau souple supérieure 5 ou la peau souple inférieure 6.

## Revendications

1. Système de gouverne à géométrie variable pour aile d'aéronef,
l'aile (2) comprenant un plan supérieur (3) et un plan inférieur (4),
le système de gouverne à géométrie variable comportant au moins :
- une peau souple supérieure (5) destinée à être fixée à l'aile (2) dans le prolongement du plan supérieur (3) de l'aile (2) ;
- une peau souple inférieure (6) destinée à être mobile dans le prolongement du plan inférieur (4) de l'aile (2) par l'intermédiaire d'une liaison plan-plan, la peau souple inférieure (6) étant fixée à la peau souple supérieure (5) le long d'un bord de fuite (7) de la gouverne (1) ;
- au moins un actionneur (8) destiné à générer un déplacement (D) de la peau souple inférieure (6) par rapport au plan inférieur (4) de l'aile (2),
le déplacement (D) de la peau souple inférieure (6) entraînant une courbure de la peau souple supérieure (5) et une courbure de la peau souple inférieure (6), la courbure de la peau souple supérieure (5) et la courbure de la peau souple inférieure (6) présentant une concavité (C1, C2) orientée dans un même sens,
**caractérisé en ce que** la peau souple supérieure (5) présente une épaisseur plus importante dans une zone (Z51) située au niveau du bord de fuite (7) et dans une zone (Z52) située au niveau de fixation de la peau souple supérieure (5) au plan supérieur (3) de l'aile (2) que dans une zone centrale (Z53) située entre la zone (Z51) située au niveau du bord de fuite (7) et la zone (Z52) située au niveau de ladite fixation, le rapport d'épaisseur entre la zone (Z51) située au niveau du bord de fuite (7) et la zone centrale (Z53) étant compris entre 2 et 3, le rapport d'épaisseur entre la zone (Z52) située au niveau de ladite fixation et la zone centrale (Z53) étant compris entre 4 et 5.

2. Système de gouverne selon la revendication 1,
**caractérisé en ce que** le ou les actionneurs (8) comprennent au moins un axe d'actionneur (9) agencé pour être déplacé longitudinalement entre la peau souple supérieure (5) et la peau souple inférieure (6), le ou les axes d'actionneur (9) comportant une extrémité (10) fixée à une surface interne (61) de la peau souple inférieure (6).

3. Système de gouverne selon l'une quelconque des revendications 1 et 2, **caractérisé en ce que** le ou les actionneurs (8) sont fixés sur une surface interne (41) du plan inférieur (4) de l'aile (2).

4. Système de gouverne selon l'une quelconque des revendications 2 et 3, **caractérisé en ce que** le ou les axes d'actionneur (9) sont configurés pour pouvoir coulisser chacun à travers une ouverture (11) d'un longeron arrière (12) de l'aile (2).

5. Système de gouverne selon la revendication 4
**caractérisée en ce qu'**il comprend au moins une douille de guidage linéaire à billes (13) configurée pour pouvoir être montée sur la ou les ouvertures (11) à travers laquelle le ou les axes d'actionneur (9) sont aptes à coulisser.

6. Système de gouverne selon l'une quelconque des revendications 2 à 5, **caractérisé en ce qu'**il comprend en outre au moins un axe auxiliaire (15) parallèle à l'axe ou aux axes d'actionneur (9), le ou les axes auxiliaires (15) présentant une première extrémité (16) destinée à être fixée au longeron arrière (12) et une deuxième extrémité (18) libre dirigée vers le bord de fuite (7) du système de gouverne (1), le système de gouverne (1) comportant en outre au moins une douille auxiliaire (17) fixée sur la surface interne (61) de la peau souple inférieure (6), la deuxième extrémité (18) libre étant apte à coulisser dans la douille auxiliaire (17).

7. Système de gouverne selon l'une quelconque des revendications 1 à 6, **caractérisée en ce qu'**il comprend en outre une ossature interne (14) entre la peau souple supérieure (5) et la peau souple inférieure (6), l'ossature interne (14) présentant une rigidité en compression et en traction selon un axe sensiblement perpendiculaire à la peau souple supérieure (5) ou la peau souple inférieure (6) supérieure à une rigidité de l'ossature interne (14) en cisaillement selon un axe sensiblement parallèle à la peau souple supérieure (5) ou la peau souple inférieure (6).

8. Système selon l'une quelconque des revendications 1 à 7,
**caractérisé en ce que** la peau souple inférieure (6) présente une épaisseur plus importante dans une zone (Z61) située au niveau du bord de fuite (7) et dans une zone (Z62) située au niveau de la liaison plan-plan entre la peau souple inférieure (6) et le plan inférieur (4) de l'aile (2) que dans une zone centrale (Z63) située entre la zone (Z61) située au niveau du bord de fuite (7) et la zone (Z62) située au niveau de ladite liaison plan-plan.

9. Système selon la revendication 8,
**caractérisé en ce que** le rapport d'épaisseur entre la zone (Z61) située au niveau du bord de fuite (7) et la zone centrale (Z63) est compris entre 2 et 3, le rapport d'épaisseur entre la zone (Z62) située au niveau de ladite liaison plan-plan et la zone centrale (Z63) est compris entre 4 et 5.

10. Aéronef,
**caractérisé en ce qu'**il comporte au moins un système de gouverne (1) selon l'une quelconque des revendications 1 à 9 équipant chacune de ses ailes (2).

## Patentansprüche

1. Steuerflächensystem mit variabler Geometrie für einen Flugzeugflügel,
wobei der Flügel (2) eine obere Ebene (3) und eine untere Ebene (4) umfasst, welche mindestens umfassen:
- eine obere flexible Haut (5), die dazu bestimmt ist, in der Verlängerung der oberen Ebene (3) des Flügels (2) am Flügel (2) befestigt zu werden;
- eine untere flexible Haut (6), die dazu bestimmt ist, in der Verlängerung der unteren Ebene (4) des Flügels (2) mittels einer Ebene-Ebene-Verbindung beweglich zu sein, wobei die untere flexible Haut (6) entlang einer Abströmkante (7) der Steuerfläche (1) an der oberen flexiblen Haut (5) befestigt ist;
- mindestens eine Betätigungsvorrichtung (8), die dazu bestimmt ist, eine Verlagerung (D) der unteren flexiblen Haut (6) in Bezug auf die untere Ebene (4) des Flügels (2) zu erzeugen,
wobei die Verlagerung (D) der unteren flexiblen Haut (6) eine Krümmung der oberen flexiblen Haut (5) und eine Krümmung der unteren flexiblen Haut (6) bewirkt, wobei die Krümmung der oberen flexiblen Haut (5) und die Krümmung der unteren flexiblen Haut (6) eine in dieselbe Richtung ausgerichtete Konkavität (C1, C2) aufweisen, **dadurch gekennzeichnet, dass**
die obere flexible Haut (5) in einer Zone (Z51), die sich im Bereich der Abströmkante (7) befindet, und in einer Zone (Z52), die sich im Bereich der Befestigung der oberen flexiblen Haut (5) an der oberen Ebene (3) des Flügels (2) befindet, eine größere Dicke aufweist als in einer
mittleren Zone (Z53), die sich zwischen der Zone (Z51), die sich im Bereich der Abströmkante (7) befindet, und der Zone (Z52) befindet, die sich im Bereich der Befestigung befindet, wobei das Dickenverhältnis zwischen der Zone (Z51), die sich im Bereich der Abströmkante (7) befindet, und der mittleren Zone (Z53) zwischen 2 und 3 liegt, wobei das Dickenverhältnis zwischen der Zone (Z52), die sich im Bereich der Befestigung befindet, und der mittleren Zone (Z53) zwischen 4 und 5 liegt.

2. Steuerflächensystem nach Anspruch 1,
**dadurch gekennzeichnet, dass** die Betätigungsvorrichtung(en) (8) mindestens eine Betätigungsvorrichtungsachse (9) umfassen, die so eingerichtet ist, dass sie in Längsrichtung zwischen der oberen flexiblen Haut (5) und der unteren flexiblen Haut (6) verlagert werden kann, wobei die Betätigungsvorrichtungsachse(n) (9) ein Ende (10) umfassen, das an einer Innenfläche (61) der unteren flexiblen Haut (6) befestigt ist.

3. Steuerflächensystem nach einem der Ansprüche 1 und 2,
**dadurch gekennzeichnet, dass** die Betätigungsvorrichtung(en) (8) an einer Innenfläche (41) der unteren Ebene (4) des Flügels (2) befestigt sind.

4. Steuerflächensystem nach einem der Ansprüche 2 und 3,
**dadurch gekennzeichnet, dass** die Betätigungsvorrichtungsachse(n) (9) so konfiguriert sind, dass sie jeweils durch eine Öffnung (11) eines hinteren Längsträgers (12) des Flügels (2) gleiten können.

5. Steuerflächensystem nach Anspruch 4,
**dadurch gekennzeichnet, dass** es mindestens eine Linearführungs-Kugelbuchse (13) umfasst, die so konfiguriert ist, dass sie an der oder den Öffnung(en) (11), durch die die Betätigungsvorrichtungsachse(n) (9) gleiten können, montiert werden kann.

6. Steuerflächensystem nach einem der Ansprüche 2 bis 5,
**dadurch gekennzeichnet, dass** es weiter mindestens eine Hilfsachse (15) umfasst, die zu der oder den Betätigungsvorrichtungsachse(n) (9) parallel ist, wobei die Hilfsachse(n) (15) ein erstes Ende (16), das dazu bestimmt ist, am hinteren Längsträger (12) befestigt zu werden, und ein freies zweites Ende (18) aufweisen, das zur Abströmkante (7) des Steuerflächensystems (1) gerichtet ist, wobei das Steuerflächensystem (1) weiter mindestens eine Hilfsbuchse (17) umfasst, die an der Innenfläche (61) der unteren flexiblen Haut (6) befestigt ist, wobei das freie zweite Ende (18) in der Hilfsbuchse (17) gleiten kann.

7. Steuerflächensystem nach einem der Ansprüche 1 bis 6,
**dadurch gekennzeichnet, dass** es weiter ein inneres Gerüst (14) zwischen der oberen flexiblen Haut (5) und der unteren flexiblen Haut (6) umfasst, wobei das innere Gerüst (14) eine Druck- und Zugsteifigkeit entlang einer Achse, die im Wesentlichen zur oberen flexiblen Haut (5) oder der unteren flexiblen Haut (6) senkrecht ist, aufweist, die größer ist als eine Schersteifigkeit des inneren Gerüsts (14) entlang einer Achse, die im Wesentlichen zur oberen flexiblen Haut (5) oder der unteren flexiblen Haut (6) parallel ist.

8. System nach einem der Ansprüche 1 bis 7,
**dadurch gekennzeichnet, dass** die untere flexible Haut (6) in einer Zone (Z61), die sich im Bereich der Abströmkante (7) befindet, und in einer Zone (Z62), die sich im Bereich der Ebene-Ebene-Verbindung zwischen der unteren flexiblen Haut (6) und der unteren Ebene (4) des Flügels (2) befindet, eine größere Dicke aufweist als in einer mittleren Zone (Z63), die sich zwischen der Zone (Z61), die sich im Bereich der Abströmkante (7) befindet, und der Zone Z62 befindet, die sich im Bereich der Ebene-Ebene-Verbindung befindet.

9. System nach Anspruch 8,
**dadurch gekennzeichnet, dass** das Dickenverhältnis zwischen der Zone (Z61), die sich im Bereich der Abströmkante (7) befindet, und der mittleren Zone (Z63) zwischen 2 und 3 liegt, das Dickenverhältnis zwischen der Zone (Z62), die sich im Bereich der Ebene-Ebene-Verbindung befindet, und der mittleren Zone (Z63) zwischen 4 und 5 liegt.

10. Flugzeug,
**dadurch gekennzeichnet, dass** es mindestens ein Steuerflächensystem (1) nach einem der Ansprüche 1 bis 9 umfasst, mit dem jeder seiner Flügel (2) ausgestattet ist.

## Claims

1. Morphing control surface system for an aircraft wing,
the wing (2) comprising an upper plane (3) and a lower plane (4),
the morphing control surface system comprising at least:
- an upper flexible skin (5) intended to be fixed to the wing (2) in the extension of the upper plane (3) of the wing (2);
- a lower flexible skin (6) intended to be movable in the extension of the lower plane (4) of the wing (2) via a plane-to-plane link, the lower flexible skin (6) being fixed to the upper flexible skin (5) along a trailing edge (7) of the control surface (1);
- at least one actuator (8) intended to generate a displacement (D) of the lower flexible skin (6) with respect to the lower plane (4) of the wing (2),
the displacement (D) of the lower flexible skin (6) causing a curvature of the upper flexible skin (5) and a curvature of the lower flexible skin (6), the curvature of the upper flexible skin (5) and the curvature of the lower flexible skin (6) having a concavity (C1, C2) oriented in a same direction,
charaterized in that the upper flexible skin (5) has a greater thickness in a zone (Z51) situated at the trailing edge (7) and in a zone (Z52) situated at the fixing of the upper flexible skin (5) to the upper plane (3) of the wing (2) than in a central zone (Z53) situated between the zone (Z51) situated at the trailing edge (7) and the zone (Z52) situated at said fixing, the thickness ratio between the zone (Z51) situated at the trailing edge (7) and the central zone Z53 being comprised between 2 and 3, the thickness ratio between the zone (Z52) situated at said fixing and the central zone (Z53) being comprised between 4 and 5.

2. Control surface system as claimed in claim 1,
**characterized in that** the actuator or actuators (8) comprise at least one actuator axis (9) arranged to be displaced longitudinally between the upper flexible skin (5) and the lower flexible skin (6), the actuator axis or axes (9) comprising an end (10) fixed to an inner surface (61) of the lower flexible skin (6).

3. Control surface system as claimed in either one of claims 1 and 2, **characterized in that** the actuator or actuators (8) are fixed onto an inner surface (41) of the lower plane (4) of the wing (2).

4. Control surface system as claimed in either one of claims 2 and 3, **characterized in that** the actuator axis or axes (9) are configured to each slide through an aperture (11) of a rear spar (12) of the wing (2).

5. Control surface system as claimed in claim 4,
**characterized in that** it comprises at least one linear ball-type guide bushing (13) configured to be mounted on the aperture or apertures (11) through which the actuator axis or axes (9) can slide.

6. Control surface system as claimed in any one of claims 2 to 5, **characterized in that** it further comprises at least one auxiliary axis (15) parallel to the actuator axis or axes (9), the auxiliary axis or axes (15) having a first end (16) fixed to the rear spar (12) and a free second end (18) directed toward the trailing edge (7) of the control surface system (1), the control surface system (1) further comprising at least one auxiliary bushing (17) fixed onto the inner surface (61) of the lower flexible skin (6), the free second end (18) being able to slide in the auxiliary bushing (17).

7. Control surface system as claimed in any one of claims 1 to 6, **characterized in that** it further comprises an internal skeleton (14) between the upper flexible skin (5) and the lower flexible skin (6), the internal skeleton (14) having a compressive and tensile strength on an axis substantially at right angles to the upper flexible skin (5) or the lower flexible skin (6) greater than a shear strength of the internal skeleton (14) on an axis substantially parallel to the upper flexible skin (5) or the lower flexible skin (6).

8. System as claimed in any one of claims 1 to 7,
**characterized in that** the lower flexible skin (6) has a greater thickness in a zone (Z61) situated at the trailing edge (7) and in a zone (Z62) situated at the plane-to-plane link between the lower flexible skin (6) and the lower plane (4) of the wing (2) than in a central zone (Z63) situated between the zone (Z61) situated at the trailing edge (7) and the zone (Z62) situated at said plane-to-plane link.

9. System as claimed in claim 8,
**characterized in that** the thickness ratio between the zone (Z61) situated at the trailing edge (7) and the central zone (Z63) is between 2 and 3, and the thickness ratio between the zone (Z62) situated at said plane-to-plane link and the central zone (Z63) is between 4 and 5.

10. Aircraft,
**characterized in that** it comprises at least one control surface system (1) as claimed in any one of claims 1 to 9 equipping each of its wings (2).
